(19) Europäisches Patentamt
European Patent Office
Office européen des brevets

(11) **EP 2 916 267 A1**

(12) # EUROPEAN PATENT APPLICATION

(43) Date of publication:
**09.09.2015   Bulletin 2015/37**

(51) Int Cl.:
**G06Q 10/00** $^{(2012.01)}$        **G06Q 30/02** $^{(2012.01)}$

(21) Application number: **15157341.7**

(22) Date of filing: **03.03.2015**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br>Designated Validation States:<br>**MA**<br><br>(30) Priority: **03.03.2014   IN MU07282014** | (71) Applicant: **Tata Consultancy Services Ltd.**<br>**Mumbai 400 021, Maharashtra (IN)**<br><br>(72) Inventors:<br>• **Ramanan, Sharadha**<br>  **600113 Chennai (IN)**<br>• **Padmanabhan, Kishore**<br>  **603103 Chennai (IN)**<br><br>(74) Representative: **Regimbeau**<br>**20, rue de Chazelles**<br>**75847 Paris Cedex 17 (FR)** |

(54) **Space planning and optimization**

(57)    Obtaining and processing input data for each of a plurality of stores. The input data includes at least one of a pre-processed performance data, a pre-processed demographics data, and a pre-processed performance data. Clustering the plurality of stores into one or more department-level clusters based on the input data. Ranking corresponding to at least one department, for each department-level cluster, to obtain a set of optimal departments for the space planning and optimization using a rapid linearization algorithm. Ranking the plurality of stores, for each department-level cluster, to obtain a set of optimal stores for the space planning and optimization. The optimal stores are a higher ranked predetermined number of stores in each said department-level cluster. Generating space planning recommendations, for each of the set of optimal stores, by processing information associated with the set of optimal departments and the set of optimal stores using a nonlinear space optimization mechanism.

Fig. 1

**Description**

FIELD OF INVENTION

The present subject matter described herein, in general, relates to space planning and optimization, and in particular, relates to systems and methods for planning and optimization of space within a retail environment.

BACKGROUND

In general, retail businesses involve buying and selling a variety of merchandise at retail stores. At such retail stores, the various merchandises are arranged in a typical manner. For instance, the merchandise may be arranged into different departments or sections based on one or more parameters, such as type of merchandise, brands of merchandise, and gender of customers. Further, each department is located at a particular location in the store based on various factors, such as popularity, demand, season, and etc. For instance, departments that have merchandise which is sought most by consumers, may be located close to an entry door of the retail stores, or can be placed in locations within the stores which are more readily accessible as compared to other locations within the stores.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system or methods in accordance with embodiments of the present subject matter are now described, by way of example, and with reference to the accompanying figures, in which:

Fig. 1 illustrates a network environment implementing a space planning and optimization system, in accordance with an embodiment of the present subject matter.

Fig. 2 illustrates a space planning and optimization system, in accordance with an embodiment of the present subject matter.

Fig. 3 illustrates a decision tree for calculating weightages for space planning and optimization, in accordance with an embodiment of the present subject matter.

Fig. 4 illustrates a method for space planning and optimization, in accordance with an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like, represent various processes which may be substantially represented in computer readable medium and so executed by a computer or processor, whether or not such computer or processor is explicitly shown.

DESCRIPTION OF EMBODIMENTS

The present subject matter relates to systems and methods for space planning and optimization in a retail environment. As indicated previously, space planning provides retailers with a variety of plans for allocating optimal space to various departments within a retail store or across multiple retail stores. Further, space planning may directly impact the sales and gross margins of the retail stores as a department having high returns may always be provided more space and a better location than a department corresponding to low selling merchandise. Therefore, it becomes essential for the retailers to determine the best possible space plan which will result in better profit margins.

Conventional space planning systems typically provide space allocation or reallocation plans based on past sales. In such a case, the space allocation plan at times may not be able to increase the profit margins as the past sales may have been high due to various dynamic factors, such as sale, promotions, and absence of similar competitor stores nearby, which may or not be same at present. Such conventional systems also do not tend to offer the required flexibility to prioritize various other aspects. For example, conventional systems may fail to consider space planning based on product substitutions, price sensitivity, space elasticity, and inventory. Moreover, such conventional systems provide space allocation plans that are static and are not configurable based on various economic or dynamic changes, such as changes in store reputations and booming economy.

Further, such conventional systems offer a linear space planning and optimization recommendation, i.e., a single space plan for use across a plurality of retail stores across a geographic area. Such linear space plans, however, may not be best suited for the needs of the local population in different geographic locations. For instance, the local population of one geographical region may prefer certain products due to which these products may perform well, in which case, the space for these products may be increased in that region. However, the same products may not be preferred by the local population in a different geographical region and thus, increasing space for that product may not profit in the other geographical region. Furthermore, space reallocations being carried by the retail stores as per such conventional space planning may result in increase in profit in few stores but may not affect or even adversely affect sales in other stores, thus resulting in no or minimal increase in sales and at the same time incurring extra costs for the space reallocations.

According to an implementation of the present subject matter, systems and methods for space planning and optimization in a retail environment are described. The space planning and optimization involves generating space planning recommendations for allocating or reallocating space for one or more departments of a store or a plurality of stores in a retail chain. In said embodiment, the departments are allocated space within a currently available floor space in the store, thus providing the space planning recommendations for maximizing profits without incurring extra costs for obtaining additional floor space. In one implementation, the space planning recommendations are generated based on at least one or more optimization parameters, such as demographics, space elasticity, space constraints, i.e., maximum and minimum allowed footage, store and department yield, inventory, department interdependencies, competitors, labor costs, and consumer purchase behavior patterns. The yield is a weighted combination of one or more performance metrics.

In one implementation, to generate the space planning recommendations, input data, such as pre-processed performance data, pre-processed demographics data, and pre-processed parameter data is obtained for each of a plurality of stores and one or more departments corresponding to the plurality of stores. In one implementation, the pre-processed performance data is indicative of performance of each store to be evaluated and each department within the stores. The demographics data is indicative of statistical data relating to population within a predetermined radius of distance around a store. The pre-processed parameter data indicates characteristics and statistical data of each store.

The input data is subsequently processed using predetermined processing rules to obtain performance data, demographics data, and parameter data. The processing rules may include rules on how the input data may be modified to remove missing values, zeros, non-numeric, outliers, negative values, and others. The processing rules further indicate procedure for calculating scores and implementing further computation for processing the input data. In one implementation, the pre-processed performance data is processed to obtain, for each store, department wise performance data that is free of any promotional effect and is de-seasonalised. The pre-processed demographics data is processed to obtain, for each store, demographics data based on geographical region corresponding to each department in the store. The pre-processed parameter data is processed to obtain, for each store, parameter data having various scores based on factors, such as competitor stores, nearby school/college, nearby same stores, and store location type that may influence sales of the store.

The performance data, the demographics data, and the parameter data may be subsequently analyzed to identify a set of key demographics and key parameters for each department, based on correlation values and factor analysis results, of the demographics data and the parameter data with respect to the performance data. The key demographics and key parameters for a department may be understood as the demographics and parameters that may influence performance of the department. Further, the key demographics and key parameters may be selected from the demographics data and parameters data, respectively, as described above. Further, the key demographics and key parameters may vary for each department and each store.

Further, the stores may be clustered into one or more predetermined number of department-level clusters based on the key demographics and key parameters. The department-level clusters are formed such that the stores within each cluster have similar characteristics and features with respect to the demographics of the department corresponding to the cluster. In one implementation, the stores may be clustered into the department-level clusters using one or more of known clustering methods, such as k-means, agglomerative, divisive, entropy weighted k-means, and hierarchical method. The department-level clusters may be analyzed to determine space elasticity for each department at the department-level clusters. The space elasticity may be understood as a parameter that captures a relationship between an increase in space given to a department and the resulting increase in sales.

The department-level clusters may be further analyzed to rank the departments, in each of the department-level cluster, to obtain a set of optimal departments for space planning and optimization. In one implementation, the departments may be ranked based on a yield of the department and using a rapid linearization algorithm to obtain the set of optimal departments. The set of optimal departments may be understood as top 'n' departments in each department-level cluster that may be reallocated space in the stores to gain a significant increase in the sales and revenue of the stores and the retail environment, where 'n' is a predetermined number.

Further, the department-level clusters may be analyzed to rank the stores, in each of the department-level cluster, to obtain a set of optimal stores for space planning and optimization. In one implementation, the stores may be ranked in each cluster using a rapid linearization algorithm to obtain the set of optimal stores for the set of optimal departments. The set of optimal stores may be understood as top 'm' stores, in each department-level cluster, in which the set of optimal departments may be reallocated space to gain a significant increase in the sales and revenue, where 'm' is a predetermined number. Once obtained, the set of optimal stores and the set of optimal departments may be processed using optimization models to generate space planning recommendations for reallocation of space to the optimal departments in the optimal stores based on the one or more optimization parameters. In one implementation, space planning recommendations may be obtained for increasing or decreasing the space allocated to the departments based on requirements of the stores. For instance, in case a store needs to have more space for advertisements or introducing new departments, the current departments may be allocated a reduced space. In case, a store has got some free space, for instance, due to removal of some department or increase in footage due to expansion of the store, the current departments may be allocated an increased space.

In one implementation, the space planning recommendations may also be obtained for opening or relocating a store into a new geographical location. In such a case the space planning recommendations may be provided for space allocation of all the departments instead of the optimal departments. The present subject matter thus facilitates space planning and optimization of departments within a store and across stores in a retail environment. Providing space planning recommendations for the selected set of optimal departments in a store helps in achieving maximum increase in profit and space utilization with minimal cost of relocating departments. Similarly, determining the set of optimal stores for each cluster helps in ensuring that space planning recommendations are provided for those stores in which relocation of the set of optimal departments may result in a significant increase in profit and sales. Further, determining the set of optimal departments and optimal stores facilitates in reducing the time taken to generate and implement the space recommendations as the system may now implement optimization models for a lesser number of departments and stores. Processing the selected set of optimal departments and set of optimal stores also facilitates in reducing resource utilization and processing costs.

Further, selecting the set of optimal departments and the set of optimal stores facilitates in providing non-linear space planning recommendations, i.e., different space planning recommendations for different stores in the retail environment based on the demographics and the parameter data of the store. Providing different space recommendations based on the demographics and the parameter data facilitates in providing an accurate and customized space recommendations for different stores as compared to same and static space planning recommendations as provided in the conventional systems as each store may have different requirements. Additionally, using the various optimization parameters, demographics data, parameter data, and performance data helps in providing a more accurate, less time consuming, and more effective method and system for space planning and optimization.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

These and other advantages of the present subject matter would be described in greater detail with reference to the following figures. It should be noted that the description merely illustrates the principles of the present subject matter. It will thus be appreciated that those skilled in the art will be able to devise various arrangements that, although not explicitly described herein, embody the principles of the present subject matter and are included within its scope. While aspects of described system(s) and method(s) of the present subject matter can be implemented in any number of different computing systems, environments, and/or configurations, the embodiments are described in the context of the following system(s).

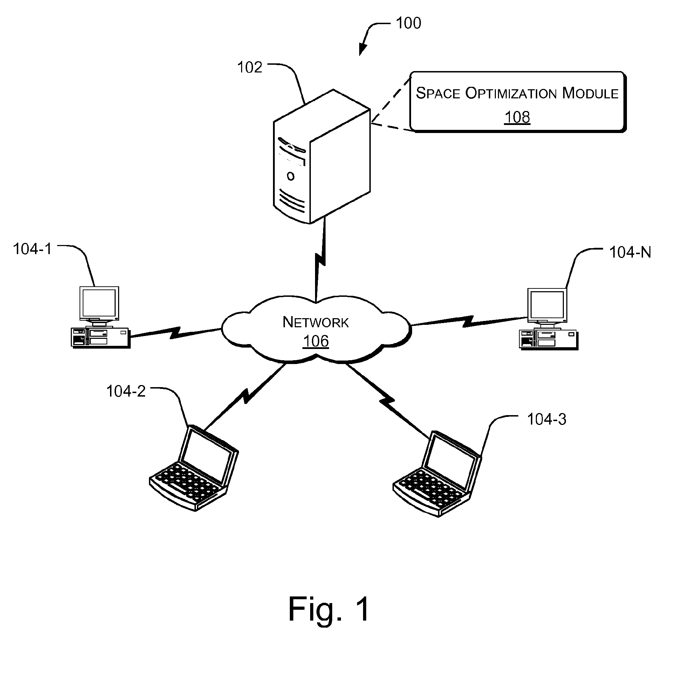

Fig. 1 illustrates a network environment 100 implementing a space planning and optimization system 102, in accordance with an embodiment of the present subject matter. In said embodiment, the space planning and optimization system 102, hereinafter referred to as the system 102, is connected to a plurality of user devices 104-1, 104-2, 104-3 ...104-N, collectively referred to as the user devices 104 and individually referred to as a user device 104. The system 102 and the user devices 104 may be implemented as any of a variety of conventional computing devices, including, for example, servers, a desktop PC, a notebook or portable computer, a workstation, a mainframe computer, an entertainment device, cellular phones, smart phones, personal digital assistants (PDAs), portable computers, desktop computers, tablet computers, phablets, and an internet appliance.

The system 102 is connected to the user devices 104 over a network 106. In one implementation, the network environment 100 can be a company network, including thousands of office personal computers, laptops, various servers, such as blade servers, and other computing devices connected over the network 106. In another implementation, the network environment 100 can be a home network with a limited number of personal computers and laptops connected over the network 106. The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols. Further, the network 106 may include network devices, such as network switches, hubs, routers, HBAs, for providing a communication link between the system 102 and the user devices 104.

The network devices within the network 106 may interact with the system 102 and the user devices 104 through the communication links. The communication links between the system 102 and the user devices 104 are enabled through a desired form of communication, for example, via dial-up modem connections, cable links, digital subscriber lines (DSL), wireless or satellite links, or any other suitable form of communication. The users, such as retailers may interact through the user devices 104 with the system 102 for generating optimal space planning recommendations for space planning and optimization for a store or a group of stores.

In one implementation, to generate the space planning recommendations for stores in a retail environment, the system 102 receives input data, such as pre-processed performance data, pre-processed demographics data, and pre-processed parameter data. In one implementation, the pre-processed performance data is indicative of performance of each store to be evaluated and each department within the stores. The pre-processed performance data include performance data fields, such as values or details indicative of sales, volumes, margins, footage, transactions at a per week per department per store level. The pre-processed demographics data is indicative of statistical data relating to population within a predetermined radius of distance around a store. The pre-processed demographics data include demographics data fields, such as store ID of a store, sales of the store, total population around the store, population type, age brackets, median age, total households around the store, average household size, annual household income, average household income, and socioeconomic score. The pre-processed parameter data indicates characteristics and statistical data of each store. The pre-processed parameter data include parameter data fields, such as store size, store transactions, store location, presence of educational institutions, competitor stores, and same retailer stores nearby. Subsequent to receiving the input data, the system 102 clusters the stores into one or more department-level clusters based on the input data. The system 102 further ranks the departments and stores in each department-level cluster.

In one implementation, the system 102 includes a space optimization module 108 for ranking the stores and the department using a rapid linearization algorithm. The space optimization module 108 initially ranks the departments in each department-level cluster to obtain a set of optimal departments for space planning and optimization. The space optimization module 108 further ranks the stores corresponding to the optimal departments in each department-level cluster to obtain a set of optimal stores. The space optimization module 108 further processes the set of optimal departments and the set of optimal stores for each of the department-level cluster to generate space planning recommendations. The space planning recommendations thus generated provides recommendations for optimal space allocations for the optimal departments in one or more of the optimal stores.

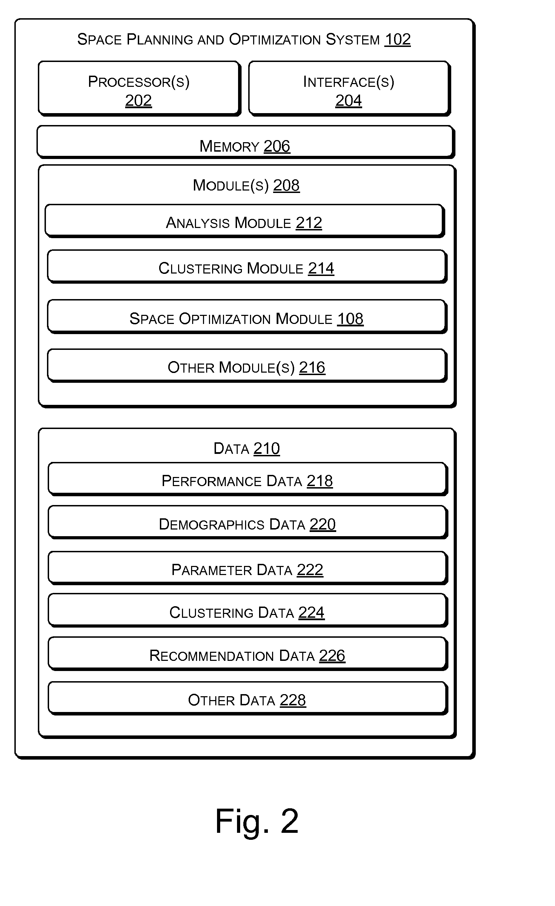

Fig. 2 illustrates components of the system 102, according to an embodiment of the present subject matter. In said embodiment, the system 102 includes one or more processor(s) 202, interface(s) 204, and a memory 206 coupled to the processor 202. The processor(s) 202, may be implemented as one or more microprocessors, microcomputers, microcontrollers, digital signal processors, central processing units, logic circuitries, and/or any devices that manipulate signals based on operational instructions. Among other capabilities, the processor(s) 202 is configured to fetch and execute computer-readable instructions stored in the memory 206.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and/or custom, may also be included.

The interface(s) 204 may include a variety of software and hardware interfaces, for example, interfaces for peripheral device(s), such as a keyboard, a mouse, and an external memory. Further, the interfaces 204 may facilitate multiple communications within a wide variety of protocol types including, operating system to application communication, inter process communication, etc.

The memory 206 can include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the system 102 may include module(s) 208 and data 210. The modules 208 and the data 210 may be coupled to the processor(s) 202. The modules 208, amongst other things, include routines, programs, objects, components, data structures, etc., which perform particular tasks or implement particular abstract data types. The modules 208 may also be implemented as, signal processor(s), state machine(s), logic circuitries, and/or any other device or component that manipulate signals based on operational instructions. In another aspect of the present subject matter, the modules 208 may be computer-readable instructions which, when executed by a processor/processing unit, perform any of the described functionalities. The machine-readable instructions may be stored on an electronic memory device, hard disk, optical disk or other machine-readable storage medium or non-transitory medium. In one implementation, the computer-readable instructions can be also be downloaded to a storage medium via a network connection.

In an implementation, the module(s) 208 includes an analysis module 212, a clustering module 214, the space optimization module 108, and other module(s) 216. The other module(s) 216 may include programs or coded instructions that supplement applications or functions performed by the system 102. The data 210 includes performance data 218, demographics data 220, parameter data 222, clustering data 224, recommendation data 226, and other data 228. The other data 228 amongst other things, may serve as a repository for storing data that is processed, received, or generated as a result of the execution of one or more modules in the module(s) 208. Although the data 210 is shown internal to the system 102, it may be understood that the data 210 can reside in an external repository (not shown in the figure), which may be coupled to the system 102. The system 102 may communicate with the external repository through the interface(s) 204 to obtain information from the data 210.

As previously described, the system 102 generates space planning recommendations for optimal space allocation/reallocation to one or more departments in the one or more stores. In one implementation, the analysis module 212 initially receives the input data from one or more of the user devices 104. Upon receiving the input data, the analysis module 212 analyses the pre-processed performance data, the pre-processed demographics data, and the pre-processed parameter for processing. Initially, the analysis module 212 analyses the input data to determine data type errors present in the input data. Example of the data type errors, include but are not limited to, missing values, zeros, non-numeric, outliers, and negative values. Upon determining the data type errors, the analysis module 212 removes the data type errors using predetermined processing rules. In one implementation, the analysis module 212 corrects the negative values corresponding to data fields in the pre-processed performance data of the departments and the pre-processed demographics data by replacing the negative values with zero values. The missing values for the data fields indicate lack of data and the analysis module 212 treats the missing values for the pre-processed performance data, such as sales and margins by replacing the missing values with a zero value. The analysis module 212 treats the missing values for the pre-processed demographic variables by replacing the missing values by the average values. The outliers may be understood as values that are outside a predetermined range of values defined using limiting values, i.e., an upper limit (maximum value) and a lower limit (minimum value). The analysis module 212 replaces the outliers in the input data with the closest limiting values to smooth the distribution and to reduce the impact of outliers on the overall distribution.

Further, the input data is standardized or normalized by the analysis module 212 by subtracting the mean of the data set from the actual value and then dividing the resultant with the standard deviation of the data set to obtain normalized data having normalized value for the data fields corresponding to each of the pre-processed performance data, the pre-processed demographics data, and the pre-processed parameter data. This makes the data dimensionless and enables comparison of data across the different data types. Further, the normalised data is rescaled by the analysis module 212 to fit into a scale of -1 to +1 to ensure that the different sets of data, i.e., the pre-processed performance data, the pre-processed demographics data, and the pre-processed parameter data are comparable with each other while retaining the differences within the data series. In one implementation, the analysis module 212 rescales the normalised values to the range <-1, 1>, by equating the minimum of the values to -1, the maximum of the values to 1, and equating all the others relative to the minimum and maximum value. Rescaling the normalized values helps in ensuring that some variables are not given undue advantage or increased weightage when they are fed as inputs for later processing.

Error-free input data, thus obtained, is subsequently processed using the predetermined processing rules to obtain, demographics data, and parameter data. In one implementation, the pre-processed performance data is processed by the analysis module 212 to obtain the performance data having yield for each department in each store of the retail environment. The analysis module 212 may calculate the yield using one or more combinations of the key parameters, such as the combination illustrated using equation 1 as given below:

$$\text{Yield} = (a* \text{Gross margin}) + (b* \text{Sales in local currency}) + (c* \text{Sales Volume})\dots(1)$$

where a, b, c are predetermined constants. The analysis module 212 may further aggregate weekly performance data to obtain yearly performance data for each department for further processing. The yearly performance data is further analyzed by the analysis module 212 to remove the effects of seasonality and promotion from the yearly performance data of each store and each department so as to improve the accuracy of further processing, such as space elasticity value computation. In order to de-seasonalise the yearly performance data, the analysis module 212 may divide the current year's weekly performance data for a particular data field, such as sales and gross margins by a corresponding seasonality index so as to obtain the de-seasonalised weekly performance data for all the weeks in the year. The de-seasonalised weekly data for each week may then be aggregated to obtain the de-seasonalised yearly performance data.

In one implementation, the Seasonality Index (S.I) may be provided by the user. In another implementation, the seasonality index may be computed by the analysis module 212 using the equation 2 as given below:

$$\text{S.I of a week for a particular data field} = \frac{\text{Average value of the data field of that week}}{\text{overall average value of the data field}} \quad ..(2)$$

where, the overall average of the data field (Y) is the average of the value of the data field for 52 weeks for all the years for which the pre-processed performance data is aggregated. The average of a week ($X_1$) for a particular field of the pre-processed performance data indicates average of the particular field of the pre-processed performance data, say, sales across all the years for the particular week. The average of the week may be calculated by the analysis module 212 using the equation 3 given below:

$$(X_1) = \frac{\text{Value of the data field during the week in } (1^{st} \text{ year} + 2^{nd} \text{ year} + 3^{rd} \text{ year} + n^{th} \text{ year})}{3} \dots (3)$$

where, n is the number of years for which the pre-processed performance data is aggregated. In one implementation, seasonality index is calculated using data from the past 3 years.

The seasonality index thus computed is used to obtain the de-seasonalised yearly performance data as described above. Further, the analysis module 212 may remove the promotional effect, i.e., effect of promotions for the department for the data corresponding to each department. The de-seasonalised department wise performance data that is free of any promotional effect thus obtained by the analysis module 212 is saved as the performance data 218. In one example, the performance data 218 may thus include de-seasonalised values indicative of sales, volumes, margins, footage, transactions and other data at a per week per department per store level that are free of any promotional effect.

Further, the analysis module 212 processes the pre-processed demographics data to obtain the demographics data. In one implementation, the pre-processed demographics data may be divided into two types of customer demographics data, namely, direct customer data and demographics data based on zipcode sales. The direct customer data can be used in the raw form by the system 102 and is thus saved in the demographics data 220 without any processing. The demographics data based on the zipcode sales is however processed using a weighted zipcode sales method. The analysis module 212 initially calculates, for each department, total sales contributed by each zip code for that particular department in a store. The analysis module 212 further calculates the percentage contribution of each zip code to the total sales of the store to obtain weightage for each zip code. Further, the analysis module 212 validates the calculations by checking whether percentage values of the contribution add to 100 for each of the demographic data field. Subsequently, for each demographic data field, the analysis module 212 calculates weighted sum of each of the zip code percentage value to obtain the demographic data for each department. The analysis module 212 may then save the zipcode wise categorized demographics data for each department in each store as the demographics data 220. The demographics data 220 may thus include zipcode wise categorized data, such as store ID of the store in the zipcode, sales of the store, total population around the store, population type, age brackets, median age, total households around the store, average household size, annual household income, average household income, a socioeconomic score, and others.

Furthermore, the analysis module 212 processes the pre-processed parameter data to obtain for each store, parameter data having various scores based on factors, such as competitor, nearby school/college, nearby same stores, and store location type that may influence sales of the store. In one implementation, the analysis module 212 may determine a competitor score, a nearby educational institutes score, a nearby same store score, and a store location type score as a part of the parameter data. The competitor score is calculated for each department for a given store based on a store identity of the store, list of major competitor stores with respect to each department, distance of the competitor store from the given store, status of each competitor store, and competitor intensity. The intensity of the competitor may be given on a scale of 1 to 10, based on the impact on the store sales. The status of the competitor store may be given as weights, such as 1, 1.5, and 0.5 for open, expanded, and under construction stores.

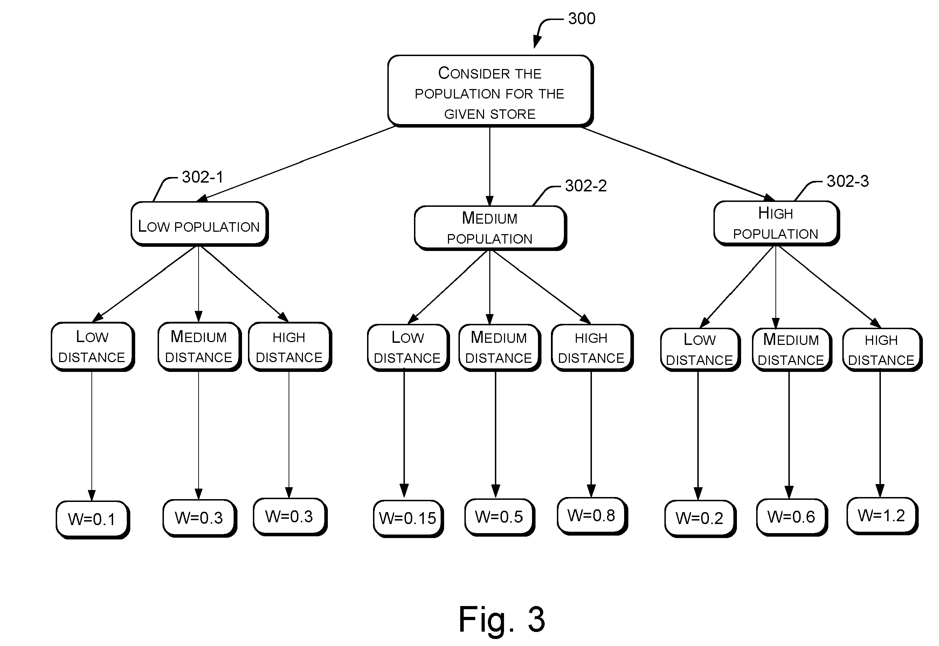

In one implementation, the relevant competitors are considered for each department, based on competitor scale data as a part of the pre-processed parameter data. The analysis module 212 further divides the store's population as well as the proximity of the relevant competitor stores from the given store, into buckets of high, medium, and low level. Based on the bucket to which the distance and the population fall into, the analysis module 212 may subsequently assign a weight which is multiplied with the actual distance between the store and the competitive store, to calculate an effective distance between the store and the competitive store. In one implementation, the weight for calculating the effective distance is determined using a decision tree 300 as depicted in figure 3. As illustrated in the figure 3, the weightages vary based on the population buckets 302-1, 302-2, and 302-3, hereinafter collectively referred to as population buckets 302 and individually as population bucket 302, in which the competitor store lies. Further, within each bucket the weightages vary based on the distance between the relevant competitor stores from the given store.

Further, the competitive intensity of a competitor store is calculated as the product of the population scale and an exponential decay of the effective distance. The analysis module 212 may then compute the competitor score for a given store, for that particular department, as the sum of the competitive intensities of all the competitors within a predetermined mile radius, say, 10 or 15 miles of the store. This process is repeated for all departments, to get distinct competitor scores for each of the departments. In one implementation, the analysis module 212 may use the equation 4 given below for determining the competition score for a department, for a given store:

$$\sum_{i=1}^{n} k_i . e^{\left(-d/2\right)} \dots\dots\dots\dots\dots\dots\dots\dots\dots\dots\dots\dots\dots(4)$$

where i refers to each of the competitor stores for the given store, n refers to the number of significant competitor stores for the given store, k$_i$ refers to the scale of the competitor store i, for the given department, and d refers to the effective distance of the competitor store from the given store. The competitor scores thus calculated may be stored in the parameter data 222 by the analysis module 212.

Further, the nearby educational institutes score is calculated to consider effect of the educational institutes, such as colleges and schools on the performance of each store. The nearby educational institutes score is calculated using data, such as distance of the educational institute in miles from the given store, type of the educational institute, existence of a particular curriculum, say, an art program. For instance, the educational institute may be given a weight of 1.2 for a private educational institute and a weight of 1 for the educational institute being a public institute. The educational institute may be further given a weight of 2 for the existence of the particular curriculum and a weight of 1 for the non-existence of the particular curriculum. Further, based on the existence of the particular curriculum, an additional population is calculated by the analysis module 212 as an approximate reflection of the additional population that could visit the store. The analysis module 212 may further compute an intensity value for each educational institute based on the distance and the adjusted population. In one implementation, the analysis module 212 may calculate the intensity value as a product of a population weight and an exponential decay of the distance. The analysis module 212 may subsequently compute a final nearby educational institutes score for a given store as the sum of the intensity values of all the educational institutes within a predetermined mile radius, say, 10, 15, or 20 mile radius of the store. In one implementation, the analysis module 212 may use the equation (5) given below for determining the nearby educational institute score for a department, for a given store:

$$\sum_{j=1}^{m} P_i . e^{\left(-d/2\right)} \dots\dots\dots\dots\dots\dots\dots\dots\dots\dots\dots(5)$$

where, j refers to each of the nearby educational institutes for the given store, m refers to the number of significant educational institutes for the given store, P refers to the adjusted population for the store, and d- refers to the distance of the educational institute from the given store. The nearby educational institutes score thus calculated may be stored in the parameter data 222 by the analysis module 212.

The analysis module 212 then calculates the nearby same store score for each store to ascertain the effect of the nearby same stores, i.e., another branch of the same store on the performance of each store. The nearby same store score may be calculated using data about other same stores in the proximity of the store being evaluated, including the distance in miles from the given store, its size and population, and the sales corresponding to the neighboring stores.

In order to determine the nearby same store score, the analysis module 212 initially divides the store's population, as well as the proximity of the nearby store from the given store into various buckets of high, medium, and low level. Based on the bucket to which the distance and the population fall into, the analysis module 212 may assign a weight which is multiplied with the actual distance to calculate the effective distance using the decision tree 300 as used for computing the competitor score. Further, a store intensity value of the nearby same store is calculated as an exponential decay of the effective distance. The analysis module 212 may subsequently compute a final nearby same store score for a given store as the sum of the store intensity values of all the same store within the predetermined mile radius, say, 10, 15, or 20 mile radius of the store. In one implementation, the analysis module 212 may use the equation 6 given below for determining the nearby educational institute score for a department, for a given store:

$$\sum_{s=1}^{l} e^{(-d/2)} \dots\dots\dots\dots\dots\dots\dots\dots\dots\dots(6)$$

where s refers to each of the nearby same stores for the given store, 1 refers to the number of significant nearby same stores for the given store, and d refers to the effective distance of the nearby same store from the given store. The nearby same store score thus calculated may be stored in the parameter data 222 by the analysis module 212.

Further, the store location type score may be calculated by the analysis module 212 for various store location types, such as a community centre, a free standing, mall, a power centre, a shopping centre, a city centre, suburbs, and a regular mall. The analysis module 212 may calculate the store location type score as a ranking of the stores based on the performance of the stores in each of a different store location type and the relative similarities between the performances across the various store location types. In one implementation, the ranks for each store location type are given based on the average sales for that store location type. The store location type score thus calculated may be stored in the parameter data 222 by the analysis module 212.

The analysis module 212 may subsequently analyze the performance data, the demographics data, and the parameter data to identify a set of key demographics and key parameters for each department. The key demographics and key parameters for a department may be understood as the demographics and parameters that may influence performance of the department. Further, the key demographics and key parameters may be selected from the demographics data and parameters data, respectively, as described above. Examples of the key demographics may thus include store ID of the store in a particular zipcode, sales of the store, total population around the store, population type, age brackets, median age, total households around the store, average household size, annual household income, average household income, and a socioeconomic score. Examples of the key parameters may thus include a store location type score, the nearby same store score, the nearby educational institutes score, and the competitor scores. Further, the key demographics and the key parameters may vary for each department and each store.

In one implementation, the analysis module 212 may determine the set of key demographics and key parameters based on correlation values and factor analysis results of the demographics data and the parameter data with respect to the performance data. The analysis module 212 generates a correlation matrix that gives the correlation values from which a top n number of demographics and other factors that affected the sales of the department may be determined in order to relate the sales of a department to the top n number of demographics and other factors. The user may thus be enabled to plan and adjust space at a department level in a store.

In one implementation, the analysis module 212 may generate the correlation matrix based on the yield of each department aggregated for a year, the department specific zipcode demographics, and the various scores part of the parameter data that affect yield at the department level. Initially, the analysis module generates a $(s \times r)$ matrix $M_d$, where s denotes a fixed number of stores chosen by the user for the processing and r denotes the yield, the department specific zipcode demographics, and the various scores. The analysis module 212 constructs the matrix $M_d$ such that rows of the matrix $M_d$ are indexed by the same department chosen across the fixed number of stores 's' and the columns are indexed by the yield. The value of the $(i,j)^{th}$ entry of the matrix thus corresponds to the value of the yield or demographic or score variables for a department d for the $i^{th}$ store. The analysis module 212 subsequently generates a correlation matrix $C_d$ based on the matrix $M_d$. In one implementation, the correlation matrix $C_d$ is generated as a matrix product of the matrix $M_d$ and a matrix $M_d^T$, i.e., the transpose of the matrix Md. Further, the analysis module 212 analyses rows corresponding to the yield in the matrix $C_d$ to identify the zipcode demographics and the various scores whose correlation values with the yield are greater than or equal to a predetermined significant correlation value h as the key demographics and key parameters for each department. A list of the key demographics and key parameters for each department may thus be stored in the clustering data 224.

The analysis module 212 may further perform a Principal Component Analysis (PCA) to determine a list of principal components $Q_d$ for each of the departments d for which the key demographics and key parameters have been ascertained. Principal Component Analysis is a well-known technique to project high dimensional data to a lower dimensional subspace by finding the most important directions, i.e., the directions where the variance is maximal. The purpose of PCA is to reduce a data set containing a large number of inter-correlated variables to a data set containing fewer hypothetical and uncorrelated components, which nevertheless represent a large fraction of the variability contained in the original data. These principal components are linear combinations of the original variables with coefficients given by the eigenvector. The PCA tries to find the factors or components that seem to explain most of the variance in the data.

In order to determine the principal components for a particular department, the analysis module 212 denotes each of the key demographics and key parameters for the department as $X_1$, $X_2$, .... $X_n$ such that each variable $X_i$ represent a *(s x 1)* vector, where s is the number of stores. The analysis module 212 further standardizes data corresponding to each variable Xi and associates a vector $Z_i$, with the variable Xi such that the mean for each variable is zero and the standard deviation is 1. Thus the standardized (s x 1) Zi is represented as equation (7) given below:

$$Z_i = \frac{(X_i - \mu_i)}{\sigma_{ii}}, \dots\dots\dots\dots\dots\dots\dots\dots\dots\dots\dots\dots(7)$$

where $\mu_i$ is the mean and $\sigma_{ii}$ is the standard deviation *of $X_i$.*

The analysis module 212 further constructs a standardized (s x n) matrix $Z_d$, whose columns are the (s x 1) vectors $Z_i$. In matrix $Z_d$, the rows are indexed by the same department chosen across the fixed number of stores, s and the columns indexed by the key demographics and key parameters for the department. Further, a correlation (n x n) matrix $\rho_d$ is calculated as the matrix product of the $Z_d^T$ and $Z_d$, where the matrix $Z_d^T$ is a transpose of the matrix $Z_d$. In one implementation, the correlation matrix $\rho_d$ contains value 1 as the diagonal elements and the correlation values between each pair of the key demographics and key parameters as the non-diagonal elements. Subsequently eigen values $\lambda_1$, $\lambda_2$, ... $\lambda_n$ of the correlation matrix $\rho_d$ are obtained by solving the equation 8 as given below:

$$| \rho_d - \lambda I | = 0 \dots\dots\dots\dots\dots\dots\dots\dots\dots\dots\dots(8)$$

Given $\lambda_i$ is an eigen value of the correlation matrix $\rho_d$, the nonzero (n x 1) vector $e_i$ is an eigenvector of $\rho_d$, if $\rho_d * e_i = \lambda_i * e_i$. Further, the $i^{th}$ principal component of the standardized data matrix $Z_d = [Z_1, Z_2, ... Z_m]$ is given by the equation 9 as given below:

$$Y_i = e_i' Z_d, \dots\dots\dots\dots\dots\dots\dots\dots\dots\dots (9)$$

where $e_i$ refers to the $i^{th}$ eigenvector of the correlation matrix $\rho_d$ and $e_i'$ refers to the transpose of $e_i$.

The analysis module 212 may then compute the principal components as the linear combinations $Y_1$, $Y_2$, ... $Y_k$ of the standardized variables $Z_d$ such that the variances of $Y_i$s are as large as possible, and the $Y_i$s are uncorrelated.

For instance, the first principal component is the linear combination $Y_1 = e_1' Z_d$, which maximizes $\text{Var}(Y_1) = e_1' \rho_d e_1$.

Similarly, the second principal component is the linear combination $Y_2 = e_2' Z_d$, which maximizes $\text{Var}(Y_2) = e_2' \rho_d e_2$. The $i^{th}$ principal component may thus be determined as the linear combination $Y_i = e_i' Z_d$, which maximizes $\text{Var}(Y_i) = e_i' \rho_d e_i$. As will be understood, the second principal component $Y_2$ is the second-best linear combination of the variables and is orthogonal to the first principal component $Y_1$.

The analysis module 212 further generates a component matrix based on the principal components such that the columns of the component matrix represents one of the components $Y_i = e_i' Z_d$. The entries of the component matrix, i.e., the component weights represent the partial correlation, $Corr(Y_i, Z_j)$, between the variable and the component, which takes into account the effect of all the other variables. The partial correlation is a function of an eigenvector and an eigen value. Furthermore, the analysis module 212 may determine the component weight using the equation 10 as

given below:

$$\text{component weights } \mathrm{Corr}(Y_i, Z_j) = e_{ij}\sqrt{\lambda_i}, \quad i, j = 1, 2, \ldots m \ldots \ldots (10)$$

where $(\lambda_1, e_1), (\lambda_2, e_2), \ldots \ldots (\lambda_n, e_n)$ are the eigen value and eigen vector pairs for the correlation matrix $\rho_d$, and $> \lambda_1 \geq \lambda_2 \geq \cdots \geq \lambda_n$.

Further, as will be understood, as the component weights are correlations, the value of the component weights vary from -1 to +1. Further, the component matrix includes rows as the significant variables and columns as the various components. In one implementation, the proportion of total variability in $Z_d$ that is explained by the $i^{th}$ principal component is the ratio of the $i^{th}$ eigenvalue to the number of variables, that is, the ratio $\frac{\lambda_i}{n}$, where n is the number of variables, i.e., the key demographics and key parameters. Further, the analysis module 212 obtains a component table of the eigen values and the proportion of variance explained by the component. The rows of the component table are the various components, while the columns of the component table gives the initial eigen values, the percentage of variance, and the cumulative percentage. The proportion of total variability gives the percentage of variance values. In one implementation, the number of principal components that may be obtained for each of the department depends either on the eigen value criterion and the proportion of variance explained criterion or as chosen by the user. As will be understood, the eigen value criterion implies that the eigen value is at least near 1. The proportion of variance explained criterion implies that the components are selected one by one until the predefined proportion of variability explained is attained. The list of the principal components $Q_d$ thus obtained for each department d is stored in the clustering data 224 for clustering of the departments and the stores.

Once determined, the key demographics and key parameters and the principal components may be used by the clustering module 214 to cluster the stores into one or more predetermined number of department-level clusters. The department-level clusters are formed such that the stores within each cluster have similar characteristics and features with respect to the demographics of the department corresponding to the cluster. In one implementation, the clustering module 214 may cluster the stores using one or more of known clustering methods, such as k-means, agglomerative, divisive, entropy weighted k-means, and hierarchical method. Although, for the purpose of brevity, and not as a limitation, the functioning of the clustering module 214 for clustering the stores is explained using the method of K means clustering, other clustering methods may be used for the clustering albeit with few modifications as will be understood by a person skilled in the art.

In order to cluster the stores into the department level clusters, the clustering module 214 initially a random collection of k clusters, with each cluster represented by the mean or average values for each of the principal components is determined. In one implementation, the k may be defined as a user-specified parameter denoting an optimal number of clusters desired to be formed. The clustering module 214 then assigns each store to the closest cluster based on an Euclidean distance between the store and each of the k vectors of mean values such that each store is assigned to the cluster at the least Euclidean distance. In one implementation, the clustering module 214 may calculate the Euclidean distance using the equation 11 as given below:

$$D(Y_i, ave(Y_i)) \sqrt{[(|Y_{i1} - ave(Y_{i1})|^2 + (|Y_{i2} - ave(Y_{i2})|^2 + } \\ + \left(|Y_{iQ_d} - ave(Y_{iQ_d})|^2\right)]..(11)$$

where $Q_d$ are the principal components and $Y_i$ is the $i^{th}$ principal component.

Further, once the department-level clusters are formed as described above, the clustering module 214 assigns a cluster number to each of the cluster. The department-level clusters along with the cluster numbers are subsequently saved in the clustering data 224. The clustering module 214 may further analyze the department-level clusters to determine space elasticity for each department at the department-level clusters. The space elasticity may be understood as a parameter that captures a relationship between an increase in space given to a department and the resulting increase in sales. In one implementation, the clustering module 214 may initially form a regression table for all stores in a cluster such that productivity values, footage values, and the principal components are represented as columns while the stores are represented as the rows. The productivity may be defined as yield per foot of each department for all the stores. Further, various types of linear and nonlinear regression methods may be used for obtaining the relation between the productivity, the footage values, and the principal components. Examples of the different types of regression methods includes linear productivity, footage and principal components model, Log - Linear productivity, footage and principal components model, and nonlinear productivity, footage and principal components model. Based on the above regression methods the clustering module 214 may determine the space elasticity for a department at the department-level cluster using the equation 12 as given below:

$$Yield = \alpha \cdot (space)(\beta) \cdot (factor1)\beta2 \cdot (factor2)\ \beta3 \cdot (factor3)\ \beta4 ..... \cdot (factor3)$$

$$\beta(n+1).........(12)$$

where yield is a weighted combination of sales, margins, volumes and other performance variables of the department; space is the relative space or space share given to the department; factor 1, factor 2, factor 3 ..... factor n, are the significant factors that affect the yield of the department; $\beta$, $\beta(1)$, $\beta(2)$, .... $\beta(n+1)$ are constants to be determined to give the value of $\beta$, i.e., the space elasticity value for the department. The space elasticity value thus calculated for each department at the department-level cluster may be saved in the clustering data 224.

In one embodiment, the clustering module 214 may further cluster the stores into store-level clusters such that the departments in each of the store-level clusters show similar behavior and have the similar demographics. Clustering the stores into store-level clustering enables easier implementation of the changes in the space allocation across the chain. In one implementation, the clustering module 214 may use K-means clustering technique for clustering the stores based on the store specific demographics using a method similar to the department-level clustering. For instance, the clustering module 214 may determine the principal components for the demographics data corresponding to the stores and cluster the stores based on the principal components. The store-level clusters along with the cluster numbers are subsequently saved in the clustering data 224.

Subsequently, the space optimization module 108 obtains a set of optimal departments for space planning and optimization. The set of optimal departments may be understood as top '*n*' departments in each department-level cluster that may be reallocated space in the stores to gain a significant increase in the sales and revenue of the stores and the retail environment, where 'n' is a predetermined number. In one embodiment, the set of optimal departments may be provided by the user through any of the user devices 104. In another embodiment, the space optimization module 108 may analyze the department-level clusters to rank the departments, in each of the department-level cluster, to obtain the set of optimal departments. In said embodiment, the space optimization module 108 may rank the departments using an optimization algorithm, such as a rapid linearization algorithm to obtain the set of optimal departments based on yield of the department. In order to rank the departments, the space optimization module 108 initially selects the department-level cluster for which the optimal set of departments are to be chosen. The space optimization module 108 then determines a maximum number of departments, say, 'x' that may be chosen as the optimal set of departments. The space optimization module 108 then processes for all the departments, for all the stores, in the selected department-level cluster using the optimization algorithm to obtain possible change in yields for each department. In one implementation, the space optimization module 108 determines value of a yield change parameter for each department for each store based at least on the space elasticity and productivity values for the department in each store, original footage (in linear feet) allocated to the department in each store, and a minimum and a maximum space that can be allocated to the department for all stores. The space optimization module 108 subsequently aggregates the values of the yield change parameter for each department for each store to obtain an accumulated yield change parameter, i.e., a sum of the yield change for that department, across all the stores. The space optimization module 108 may subsequently rank the departments in a predetermined, say, descending order of the value of the accumulated yield change parameter. The top n departments may then be chosen as the optimal set of departments for the particular department-level cluster. A list of the optimal set of departments for each of the department-level cluster may then be saved in the recommendation data 226.

In one implementation, the space optimization module 108 may use a rapid linearization algorithm as the optimization algorithm. The rapid linearization algorithm may be used to obtain the optimal set of departments. The space optimization module 108 uses the rapid linearization algorithm to ascertain the top x departments that drive the revenue of the stores and whose change in space allocation will result in the maximum change in revenue across the stores in department-level cluster. In order to implement the algorithm the space optimization module 108 obtains, as inputs, a cluster comprising of a set of n stores $s_1$, $s_2$, .... , $s_n$, the set of m departments $d_{i1}$, $d_{i2}$,...., $d_{im}$ in a store $s_i$, with corresponding space elasticity values $\beta_{i1}$, $\beta_{i2}$, .... , $\beta_{im}$, productivity values $P_{i1}$, $P_{i2}$, ...., $P_{im}$ and minimum and maximum space values allocated for each department and store.

The rapid linearization algorithm initiates with selecting the store si to be evaluated. The space optimization module 108 defines a variable '*Optim Dept*' as an empty set. Subsequently, the space optimization module 108 defines a variable 'No Dept' as equal to the number of top departments that have to be chosen, say, x. For the input set of departments, a matching department is the found such that the matching department may provide maximum revenue. A pair of departments that may result in maximum revenue change is selected and the departments are added to '*Optim*

*Dept'*. In one implementation, The a pair of departments that result in maximum revenue change rather than a single department is obtained since revenue increase is based on increasing space for one department and correspondingly decreasing space for the another one. The space optimization module 108 then checks for a condition, i.e., a cardinality *('Optim Dept' > 'No. Dept')* to determine if the condition is satisfied. If the condition is satisfied, then the pair of departments that results in the second highest change in yield is selected and the departments are added to *'Optim Dept'*. If the condition is not satisfied, then the yield is updated and space for each of the departments is added to *'Optim Dept'*. Further, the departments were paired with the selected departments are chosen.

The space optimization module 108 may then check for a condition if the cardinality *('Optim Dept' < 'No. Dept')*. If the condition is satisfied, the steps of the rapid linearization algorithm from the initial step are performed again until all the departments are covered. If the condition is not satisfied, the change in yield for each of the selected departments is added to the accumulated yield change for that particular department. The space optimization module 108 may then check if all the stores in the department-level cluster have been analyzed. If the condition is not satisfied, the steps of the algorithm from the initial step are performed again until all the stores are covered. If the condition is satisfied, the departments are sorted in a descending order of the accumulated yield change. The top 'x' number of departments are then selected as the optimal set of departments for the chosen department-level cluster. The space optimization module 108 may then ascertains whether any pre-selection of departments has been done by the user for selecting the optimal set of departments. The pre-selection may be understood as a case where the user has provided his own choices for the departments that he wants to be selected as the optimal set of departments. In absence of any pre-selection of departments, all the input data for the chosen departments are pre-selected, and *'Optim Dept'* is made an empty set and the steps of the algorithm from the initial step are performed again.

The algorithm is run for all the departments and for all the stores in the selected cluster. Further, the departments are sorted in descending order of this parameter and the top x departments are chosen. The output of the algorithm is a set of optimal departments for each store, as well as an accumulated revenue change parameter, which is the sum of the yield change for that department, across all the stores. The algorithm is also run for all the store-level clusters to get the optimal number of departments for each store-level cluster. The output is a set of optimal departments for each store-level cluster. Further, the stores may be sorted in descending order of total 'Change in Yield'. The top stores may be selected as the 'Maximum Opportunity' stores for performing the space optimization. The space optimization module 108 subsequently ranks the stores, in each of the department-level cluster, to obtain a set of optimal stores in which the set of optimal departments may be reallocated space. The set of optimal stores may be understood as top 'm' stores, in each department-level cluster, in which the set of optimal departments may be reallocated space to gain a significant increase in the sales and revenue, where 'm' is a predetermined number. In one implementation, the space optimization module 108 ranks the stores in each cluster using a rapid linearization algorithm in a manner similar to the ranking of the departments. The space optimization module 108 initially determines a value of a potential yield change parameter to determine a potential increase in the yield for each of the stores upon change in the space allocation of the optimal departments. The space optimization module 108 may subsequently rank the stores in a descending order of the value of the potential yield change parameter and selects the top m departments as the optimal set of stores for the particular department-level cluster. A list of the optimal set of stores for each of the department-level cluster may then be saved in the recommendation data 226.

Further, the space optimization module 108 processes the information associated with the set of optimal stores and the set of optimal departments to generate space planning recommendations for reallocation of space to the optimal departments in the optimal stores. In one implementation, the space optimization module 108 uses one or more optimization models to generate the space planning recommendations based on the one or more optimization parameters, the set of optimal stores, and the set of optimal departments. For instance, the space optimization module 108 may use nonlinear space optimization mechanism to process information associated with the set of optimal departments and the set of optimal stores, for each of the set of optimal stores, to generate the space planning recommendations based on the one or more optimization parameters.

The optimization parameters include, for example, the demographics, the space elasticity, space constraints, i.e., maximum and minimum allowed footage, the store and department yield, inventory, department interdependencies, competitors, labor costs, and consumer purchase behavior patterns. In one implementation, the space constraints include both a department space constraint and a store space constraint. Typically, the total store space, measured as a sum of all the department space, should remain constant and thus department space is considered as the space constraint. However, in cases where the total space for a store needs to be reduced by a given percentage, say, 15 % or 20%, the store space is also considered as the space constraint.

In one implementation, the space optimization module 108 generates the space planning recommendations by maximizing the total yield of the store, as a sum of yield for each department while ensuring that the total space occupied by the departments remains constant. For example, upon determining the optimization parameters, the space optimization module 108 determines a maximum value of the total yield that may be obtained from each store upon changing the footages, i.e., reallocation of space, of the optimal departments in the store. Based on the maximum yield, the space optimization module 108 may generate the space planning recommendations using an optimization model as illustrated below to provide a recommendation for new space allocation for each department in a store.

<u>Optimization Model</u>

<u>Indices</u>

Department i(i=1,2,...n,)
Store *j(j = 1,2, ...,m)*

<u>Model Variables</u>

$Q_i$ :    New footage space that is occupied by department i
$Y_i$ :    New yield for department i
$\boldsymbol{P_i}$ :    New space productivity for department i

<u>Input Parameters</u>

$R_i$ :       Original footage space that is occupied by department i
$M_i$ :       Maximum space defined for department i
$m_i$ :       Minimum space defined for department i
$L_i$ :       Total store space
$S_i$ :       Original Sales for department i, aggregated for 52 weeks
$G_i$ :       Original Gross Margin for department i, aggregated for 52 weeks
$V_i$ :       Original number of units sold for department i, aggregated for 52 weeks
$C_i$ :       Inventory Carrying costs
$E_i$ :       Effective Gross Margin for department i, aggregated for 52 weeks
$y_i$ :       Original yield for department i, aggregated for 52 weeks
$p_i$ :       Old space productivity for department i
$\beta_i$       Space elasticity for department i
$K_i$ :       Constant obtained while calculating space elasticity $\beta_i$ value for department, $\forall$ i
a, b, c:    Predetermined constants for calculation ofYield

<u>Costs</u>

WACC|i = Weight of inventory carrying costs
Average Inventory costs|i = Average inventory costs for department i

<u>Model Functions</u>

Total Store space

$$L_i = \sum_i R_i \qquad\qquad \forall\ i$$

Effective Gross Margin

$$E_i = [G_i - C_i] \qquad \forall\, i$$

Inventory carrying costs

$$C_i = \text{Average Inventory costs}|i * \text{WACC}|i \qquad \forall\, i$$

Original Yield

$$y_i = a * S_i + b * [\, E_i\, ] + c * V_i \qquad \forall\, i$$

Space elasticity calculation

$$K_i = \frac{y_i}{(R_i)^{\beta_i}} \qquad \forall\, i$$

Old Space Productivity

$$p_i = \frac{y_i}{R_i} \qquad \forall\, i$$

New Space Productivity

$$P_i = K_i * (Q_i)^{\beta_i - 1} \qquad \forall\, i$$

New Yield

$$Y_i = P_i * Q_i$$

$$\forall\, i$$

Model Objective function

MAXIMIZE :To maximize the total yield of the store

$$\text{Total Yield of the store} = \sum_i^n [\,(K_i) * (Q_i)^{\beta_i} - C_i]$$

where $K_i$ is the constant obtained while calculating the space elasticity $\beta_i$, $Q_i$ is the new space allocation for department i, and $C_i$ is the inventory carrying costs. The details of the calculation of $K_i$ values are given in the section containing the space elasticity approach details. The objective function is maximized such that the following constraints are satisfied.

Model Constraints

1. Space Constraints: The space allocated to a department should lie between the maximum and minimum space defined for that department.

$$m_i \leq Q_i \leq M_i \qquad\qquad \forall\ i$$

Further, the total store space has to be constant

$$\sum_1^n Q_i = L_i \qquad\qquad \forall\ i$$

2. Non - negativity constraints: The footage space values should be non negative.

$$Q_i \geq 0 \qquad\qquad \forall\ i$$

The Mathematical Formulation

Maximize

$$\sum_i^n [(K_i) * (Q_i)^{\beta_i} - C_i]$$

subject to

$$m_i \leq Q_i \leq M_i \qquad\qquad \forall\ i$$

$$\sum_1^n Q_i = L_i \qquad\qquad \forall\ i$$

$$Q_i \geq 0 \qquad\qquad \forall\ i$$

The space optimization module 108 uses the above optimization formulation which is a nonlinear optimization problem and is solved numerically using the Generalized Reduced Gradient (GRG) method or other methods.

The space optimization module 108 may subsequently save the value of Qi determined above as the space planning recommendations for each store along with the total possible increase in yield of the store and the possible increase/ decrease in yield per department of the store. In one implementation, the space optimization module 108 may provide the space planning recommendations for a certain predetermined number of stores from among the optimal stores based on a user input. Further, the space optimization module 108 may save the space planning recommendations in the recommendation data 226.

Further, the space optimization module 108 may provide space planning recommendations for increasing or decreasing the space allocated to the departments based on requirements of the stores. For instance, in case a store needs to have more space for advertisements or introducing new departments, the current departments may be allocated a reduced space. In case, a store has got some free space, the current departments may be allocated an increased space. In one implementation, the space planning recommendations may also be obtained for opening or relocating a store into a new geographical location. In such a case the space planning recommendations may be provided for space allocation of all the departments instead of the optimal departments.

Further, the space optimization module 108 may provide a list of user-customization scenarios, where the space optimization module 108 may provide customized space planning recommendations based on user requirements. For instance, the user may choose a subset of departments and a subset of stores, for pilot or for actual implementation, from the existing set of optimal department and optimal stores for optimization. In one implementation, the space optimization module 108 may generate the list of user-customization scenarios based on the key parameters. The space optimization module 108 may thus perform the space planning and optimization for the user selected department and stores. Further, the user may choose a subset of departments for increase in space allocation and a subset of departments for decrease in space allocation, based on actual store implementation constraints, for which the space optimization module 108 may provide the space planning recommendations. In one implementation, the user may vary, say, reduce or increase the total store space, thus requesting the space optimization module 108 to provide the space planning recommendations based on the new footage. Alternatively, the user may change just the minimum or maximum footages for the departments, thus requesting the space optimization module 108 to provide the space planning recommendations based on the new footage. The user may further request the space optimization module 108 to provide the space planning recommendations for a predetermined number, say, top x stores for a subset of departments. The space optimization module 108 may thus run the optimization module for the predetermined number of stores. Additionally, the user may choose to optimize all the departments instead of the set of optimal departments in a store.

Further, the user may modify the input variables used for selecting the principal components or the space elasticity for the departments. For instance, the user may include demographics data as well for the calculation. Alternately, the user may choose to use the performance data. Further, the system 102 facilitates the user to modify weights of the yield components. Further, the list of departments to be optimized may be selected based on a user provided list or determined using the method above or may be obtained based on a combination of the user provided and the system 102 determined list of the optimal departments.

The space optimization module 108 may further classify the departments as either space dependent departments or space independent departments. The space dependent departments may be understood as the departments chosen for the space reallocation such that that space exchange can take place between them. The space independent departments may be understood as the departments chosen for the space reallocation such that space cannot be exchanged other departments and the user may thus need to make physical changes to create space for these departments. Such a classification further helps the user in determining the cost and time for implementing the space planning recommendations.

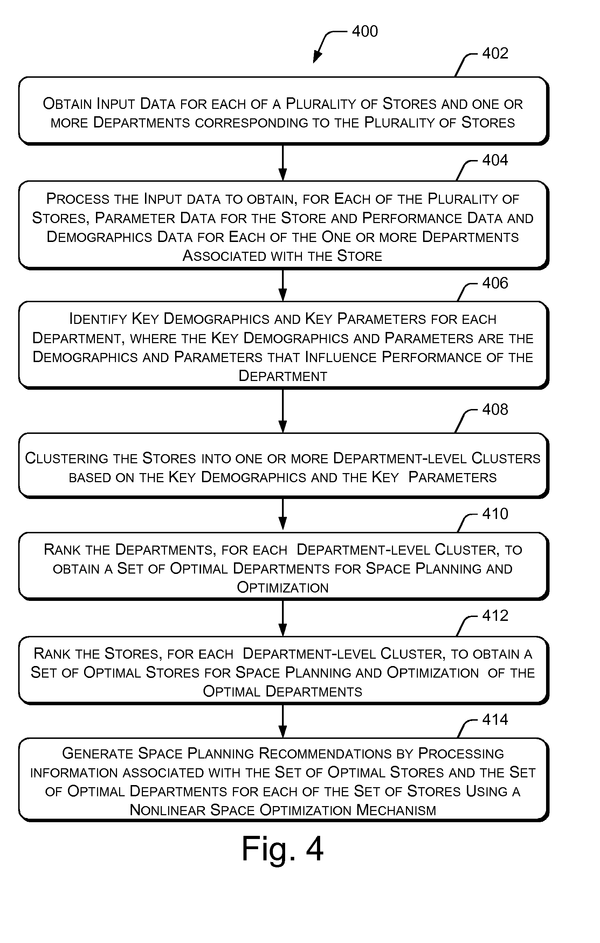

Fig. 4 illustrates a method for space planning and optimization, in accordance with an embodiment of the present subject matter. The order in which the method is described is not intended to be construed as a limitation, and any number of the described method blocks can be combined in any order to implement the method 400 or any alternative methods. Additionally, individual blocks may be deleted from the method without departing from the spirit and scope of the subject matter described herein. Furthermore, the method(s) can be implemented in any suitable hardware, software, firmware, or combination thereof.

The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the method 400 can be performed by programmed computers. Herein, some embodiments are also intended to cover program storage devices or computer readable medium, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover both communication network and communication devices to perform said steps of the method(s).

At block 402, input data for each of a plurality of stores and one or more departments corresponding to the plurality of stores is obtained. In one implementation, input data may include pre-processed performance data, pre-processed demographics data, and pre-processed parameter data. In one implementation, the pre-processed performance data is indicative of performance of each store to be evaluated and each department within the stores. The pre-processed demographics data is indicative of statistical data relating to population within a predetermined radius of distance around a store. The pre-processed parameter data indicates characteristics and statistical data of each store.

At block 404, the input data is processed to obtain, for each of the plurality of stores, parameter data for the store and performance data and demographics data for each of the one or more departments associated with the store. In one implementation, on receiving the input data, a space planning optimization system, such as the system 102 processes the pre-processed performance data, pre-processed demographics data, and pre-processed parameter data to obtain the performance data, the demographics data, and the parameter data, respectively. For instance, the pre-processed performance data may be processed to obtain, for each store, department wise performance data that is free of any promotional effect and is de-seasonalised, i.e., independent of season. The pre-processed demographics data may be processed to obtain, for each store, the demographics data having a zipcode wise categorized demographics data for each department in the store. Further, the pre-processed parameter data may be processed to obtain, for each store, the parameter data having various scores based on factors, such as competitor, nearby school/college, nearby same store, and store location type that may influence sales of the store.

At block 406, key demographics and key parameters for each department are identified. In one implementation, the key demographics and key parameters are the demographics and parameters that influence performance of the department and are determined based on correlation values of the demographics data and the parameter data with respect to the performance data. A correlation matrix is generated that gives the correlation values from which a top n number of demographics and other factors that affected the sales of the department may be determined in order to relate the sales of a department to the top n number of demographics and other factors.

At block 408, the stores are clustered into one or more department-level clusters based on the key demographics and key parameters. The department-level clusters are formed such that the stores within each cluster have similar characteristics and features with respect to the demographics of the department corresponding to the cluster. In one implementation, the stores are clustered using one or more of known clustering methods, such as k-means, agglomerative, divisive, entropy weighted k-means, and hierarchical method.

At block 410, the departments are ranked, for each department-level cluster, to obtain a set of optimal departments for space planning and optimization. The set of optimal departments may be understood as top 'n' departments in each department-level cluster that may be reallocated space in the stores to gain a significant increase in the sales and revenue of the stores and the retail environment, where 'n' is a predetermined number. In said embodiment, the system 102 may rank the departments using a rapid linearization algorithm to obtain the set of optimal departments based on yield of the department.

At block 412, the stores are ranked, for each department-level cluster, to obtain a set of optimal stores for space planning and optimization of the optimal departments. The set of optimal stores may be understood as top 'm' stores, in each department-level cluster, in which the set of optimal departments may be reallocated space to gain a significant increase in the sales and revenue, where 'm' is a predetermined number. In one implementation, the stores may be ranked in each cluster using a rapid linearization algorithm to obtain the set of optimal stores for the set of optimal departments based on yield of the store.

At block 414, information associated with the set of optimal stores and the set of optimal departments may be processed using optimization models to generate space planning recommendations. In one implementation, nonlinear space optimization mechanism may be performed for processing the information associated with the set of optimal departments and the set of optimal stores, for each of the set of optimal stores, to generate the space planning recommendations based on one or more optimization parameters. Further, the space planning recommendations may be generated for reallocation of space to the optimal departments in the optimal stores based on the one or more optimization parameters. In one implementation, space planning recommendations may be obtained for increasing or decreasing the space allocated to the departments based on requirements of the stores.

Although embodiments for the present subject matter have been described in a language specific to structural features or method(s), it is to be understood that the invention is not necessarily limited to the specific features or method(s) described. Rather, the specific features and methods are disclosed as embodiments for the present subject matter.

## Claims

1. A computer implemented method for space planning and optimization, the method comprising:

   obtaining and processing input data for each of a plurality of stores, wherein input data includes at least one of a pre-processed performance data, a pre-processed demographics data, and a pre-processed performance data;

   clustering, by a clustering module (214) the plurality of stores into one or more department-level clusters based on the input data;

   ranking, by a space optimization module (108), corresponding to at least one department, for each department-level cluster, to obtain a set of optimal departments for the space planning and optimization, wherein the optimal departments are ranked using a rapid linearization algorithm;

   ranking, by the space optimization module (108), the plurality of stores, for each department-level cluster, to obtain a set of optimal stores for the space planning and optimization, wherein the optimal stores are a higher ranked predetermined number of stores in each said department-level cluster; and

   generating, by the space optimization module (108), space planning recommendations, for each of the set of optimal stores, by processing information associated with the set of optimal departments and the set of optimal stores using a nonlinear space optimization mechanism.

2. The method as claimed in claim 1, further comprising:

   processing, based on one or more processing rules, the input data, by the processor, for each of the plurality of stores, parameter data for the store, and performance data and demographics data for each of the one or more departments associated with the stores;

identifying, by the processor (202), at least one demographic and at least one parameter, from the pre-processed demographics data and the pre-processed parameter data, respectively, based on a plurality of correlation values and a factor analysis result of the pre-processed demographics data and the pre-processed parameter data with respect to the pre-processed performance data; and

computing, by the clustering module (214), space elasticity for each of the one or more departments, for each department-level cluster, based on at least one of a key demographic, a key parameter, current space allocated to the department and a yield of the department.

**3.** The method as claimed in claim 1, comprising generating said plurality of space planning recommendations by maximizing a total yield of the stores by the space optimization module to meet at least one of a maximum and a minimum footage for a space constraint of said optimal departments, further comprising generating a component matrix based on a set of principal components, wherein the entries of the component matrix represents a partial correlation Corr($Y_i$, $Z_j$), between a variable and a component.

**4.** The method as claimed in claim 1, wherein the method further comprises determining, by an analysis module (212), a set of principal components for clustering of at least one of the departments, based on the input data by performing a principal component analysis.

**5.** The method as claimed in claim 1, wherein the clustering further comprises clustering, by the clustering module (214), the plurality of stores into one or more store-level clusters based on a plurality of store specific key demographics and key parameters, further wherein the stores are clustered by using at least one of k-means, agglomerative, divisive, entropy weighted k-means, and a hierarchical method.

**6.** The method as claimed in claim 1, further comprising performing the non-linear space optimization mechanism for processing information associated with a set of optimal departments and optimal stores to generate at least one space planning recommendation.

**7.** A computer implemented space planning and optimization system (102) comprising:

a processor (202);
an analysis module (212) coupled to the processor (202) to obtain input data for each of a plurality of stores, wherein input data includes at least one of a pre-processed performance data, a pre-processed demographics data, and a pre-processed performance data, and wherein said space planning optimization system (102) processes at least one of said pre-processed performance data, said pre-processed demographics data, and said pre-processed parameter data, wherein said pre-processed data indicates at least one of characteristics, statistical data and performance, further wherein the analysis module (212) determines a set of principal components for each of the one or more departments based on the input data;
a clustering module (214) coupled to the processor (202) to cluster the plurality of stores into at least one department-level cluster based on the input data, corresponding to at least one department value demographic for calculating a plurality of department space elasticity values; wherein said clustering module (214) clusters the plurality of stores into a plurality of store-level clusters based on a store level demographic;
a space optimization module (108) coupled to the processor (202) to,
rank the departments, for each department-level cluster, to obtain a set of optimal departments for a space planning and optimization, wherein the optimal departments are top predetermined number of departments in each department-level cluster;
rank the stores, for each department-level cluster, to obtain a set of optimal stores for the space planning and optimization, wherein the optimal stores are top predetermined number of stores in each department-level cluster and wherein said space optimization module (108) ranks the departments using a rapid linearization algorithm;
generate space planning recommendations, for each of the set of optimal stores, by processing information associated with the set of optimal departments and the set of optimal stores using a nonlinear space optimization mechanism, wherein the nonlinear space optimization mechanism utilizes one or more optimization parameters, and wherein the space optimization module (108) classifies said departments as at least one of space dependent departments and space independent departments;
perform a store level optimization after forming a cluster of stores corresponding to said store level demographic for obtaining a final set of space recommendations at a store level; and
provide a list of at least one user customization scenario, wherein the space optimization module (108) is configured to provide a plurality of customized space planning recommendations.

8.  The space planning and optimization system (102) as claimed in claim 7, wherein the clustering module further computes the space elasticity value for at least one of the each of the one or more departments, for each department-level cluster, based on the input data, current space allocated to the department and yield of the department.

9.  The space planning and optimization system (102) as claimed in claim 7, wherein the analysis module (212) is further configured to,
    receive the input data for each of the plurality of stores and the corresponding one or more departments;
    process, the input data to obtain, for each of the plurality of stores, at least one of a parameter data for the store, and a performance data and a demographics data for each of the one or more departments associated with the store; and
    identify a key demographic and a key parameter, from at least one of the demographics data and the parameter data, respectively, based on a correlation value and a factor analysis of the demographics data and the parameter data with respect to the performance data.

10. The space planning and optimization system (102) as claimed in claim 7, wherein the input data comprises at least one of a pre-processed performance data, a pre-processed demographics data, and a pre-processed parameter data.

11. The space planning and optimization system (102) as claimed in claim 10, wherein the pre-processed performance data is indicative of performance of each said store to be evaluated and each department within the store, and wherein the pre-processed performance data includes values indicative of at least one of sales, volumes, margins, footage, transactions at a per week per department per store level.

12. The space planning and optimization system (102) as claimed in claim 10, wherein the pre-processed demographics data, for each of the plurality of stores, is indicative of statistical data relating to a population within a predetermined radius of distance around the store, and wherein the pre-processed demographics data includes at least one of store ID of the store, sales of the store, a total population around the store, a population type, age bracket, median age, total households around the store, average household size, annual household income, average household income, and a socioeconomic score.

13. The space planning and optimization system (102) as claimed in claim 10, wherein the pre-processed parameter data indicates characteristics and statistical data of each of the plurality of stores, and wherein the pre-processed parameter data includes at least one of a store size, store transactions, competitor stores, a store location, presence of educational institutions, and retailer stores.

14. The space planning and optimization system (102) as claimed in claim 7, wherein the clustering module (214) further clusters the plurality of stores into one or more store-level clusters based on one or more store specific key demographics and key parameters.

15. A non-transitory computer-readable medium having embodied thereon a computer program for executing a method of space planning and optimization of one or more departments corresponding to a plurality of stores, the method comprising:

    obtaining key demographics and key parameters for each of the one or more departments, wherein the key demographics and the key parameters are parameters that are associated with performance of the department;
    clustering the plurality of stores into one or more department-level clusters based on the key demographics and the key parameters;
    ranking the departments, for each department-level cluster, to obtain a set of optimal departments for the space planning and optimization, wherein the set of optimal departments are top predetermined number of departments in each department-level cluster;
    ranking the stores, for each department-level cluster, to obtain a set of optimal stores for the space planning and optimization, wherein set of the optimal stores are top predetermined number of stores in each department-level cluster; and
    generating space planning recommendations, for each of the set of optimal stores, by processing information associated with the set of optimal departments and the set of optimal stores using nonlinear space optimization mechanism, wherein the nonlinear space optimization mechanism utilizes one or more optimization parameters.

Fig. 1

SPACE PLANNING AND OPTIMIZATION SYSTEM 102

PROCESSOR(S)
202

INTERFACE(S)
204

MEMORY 206

MODULE(S) 208

ANALYSIS MODULE 212

CLUSTERING MODULE 214

SPACE OPTIMIZATION MODULE 108

OTHER MODULE(S) 216

DATA 210

PERFORMANCE DATA 218

DEMOGRAPHICS DATA 220

PARAMETER DATA 222

CLUSTERING DATA 224

RECOMMENDATION DATA 226

OTHER DATA 228

Fig. 2

Fig. 3

EP 2 916 267 A1

400

402

OBTAIN INPUT DATA FOR EACH OF A PLURALITY OF STORES AND ONE OR MORE DEPARTMENTS CORRESPONDING TO THE PLURALITY OF STORES

404

PROCESS THE INPUT DATA TO OBTAIN, FOR EACH OF THE PLURALITY OF STORES, PARAMETER DATA FOR THE STORE AND PERFORMANCE DATA AND DEMOGRAPHICS DATA FOR EACH OF THE ONE OR MORE DEPARTMENTS ASSOCIATED WITH THE STORE

406

IDENTIFY KEY DEMOGRAPHICS AND KEY PARAMETERS FOR EACH DEPARTMENT, WHERE THE KEY DEMOGRAPHICS AND PARAMETERS ARE THE DEMOGRAPHICS AND PARAMETERS THAT INFLUENCE PERFORMANCE OF THE DEPARTMENT

408

CLUSTERING THE STORES INTO ONE OR MORE DEPARTMENT-LEVEL CLUSTERS BASED ON THE KEY DEMOGRAPHICS AND THE KEY PARAMETERS

410

RANK THE DEPARTMENTS, FOR EACH DEPARTMENT-LEVEL CLUSTER, TO OBTAIN A SET OF OPTIMAL DEPARTMENTS FOR SPACE PLANNING AND OPTIMIZATION

412

RANK THE STORES, FOR EACH DEPARTMENT-LEVEL CLUSTER, TO OBTAIN A SET OF OPTIMAL STORES FOR SPACE PLANNING AND OPTIMIZATION OF THE OPTIMAL DEPARTMENTS

414

GENERATE SPACE PLANNING RECOMMENDATIONS BY PROCESSING INFORMATION ASSOCIATED WITH THE SET OF OPTIMAL STORES AND THE SET OF OPTIMAL DEPARTMENTS FOR EACH OF THE SET OF STORES USING A NONLINEAR SPACE OPTIMIZATION MECHANISM

Fig. 4

Europäisches
Patentamt

European
Patent Office

Office européen
des brevets

**EUROPEAN SEARCH REPORT**

Application Number

EP 15 15 7341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 787 865 A1 (TATA CONSULTANCY SERVICES LTD [IN]) 24 February 2014 (2014-02-24) * the whole document * ----- | 1-15 | INV. G06Q10/00 G06Q30/02 |
| X,P | EP 2 704 082 A1 (TATA CONSULTANCY SERVICES LTD [IN]) 5 March 2014 (2014-03-05) * the whole document * ----- | 1-15 | |

TECHNICAL FIELDS
SEARCHED        (IPC)

G06Q

The present search report has been drawn up for all claims

| Place of search | Date of completion of the search | Examiner |
|---|---|---|
| Munich | 7 July 2015 | Flores Sanchez, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 15 7341

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2015

| Patent document cited in search report | Publication date | Patent family member(s) | Publication date |
|---|---|---|---|
| CA 2787865    A1 | 24-02-2014 | NONE | |
| EP 2704082    A1 | 05-03-2014 | NONE | |

EPO FORM P0459

For more details about this annex : see Official Journal of the European Patent Office, No. 12/82